# EUROPÄISCHE PATENTSCHRIFT

(11) **EP 2 651 745 B1**
(45) Veröffentlichungstag und Bekanntmachung des Hinweises auf die Patenterteilung: **29.06.2016**
(21) Anmeldenummer: 11805408.9
(22) Anmeldetag: 08.12.2011
(51) Int. Cl.: B62D 5/04, F16C 19/06, F16C 23/08, F16C 27/06

(54) **SERVOLENKUNG MIT SPINDELTRIEB**
POWER STEERING SYSTEM WITH SPINDLE DRIVE
DIRECTION ASSISTÉE MUNIE D'UN MÉCANISME À BROCHE

(30) Priorität: 16.12.2010 DE 102010054828
(43) Veröffentlichungstag der Anmeldung: 23.10.2013
(73) Patentinhaber: ThyssenKrupp Presta AG, 9492 Eschen (LI)
(72) Erfinder: STAMM, Zoltan, CH-9472 Grabs (CH); RATH, Krisztian, H-1096 Budapest (HU)
(74) Vertreter: Lenzing Gerber Stute
(86) Internationale Anmeldenummer: PCT/EP2011/006183
(87) Internationale Veröffentlichungsnummer: WO 2012/079726

(56) Entgegenhaltungen:
- WO-A1-03/076832
- DE-A1- 10 325 522
- DE-A1-102004 034 701
- DE-A1-102006 037 479
- DE-A1-102007 037 792

## Beschreibung

Die vorliegende Erfindung betrifft eine Servolenkung, insbesondere für ein Kraftfahrzeug, mit einem Servomotor, der ein axial verlagerbares Bauelement über eine in einem Gestell drehbar, aber axial unverschiebbar gelagerte Mutter antreibt, nach dem Oberbegriff des Anspruchs 1. Bei Lenkungen mit einem elektromotorischen Servoantrieb, der über einen Kugelgewindetrieb wirkt, wird die Kugelmutter entweder starr im Gehäuse gelagert oder durch Einsatz von Federelementen und besondere Gestaltung des Gehäuses oder des Lagers eine gewisse Längs- und Kippbewegung ermöglicht. Eine sphärische Lagerung, bei der sowohl der Lagerring als auch das Gestell eine kugelige Fläche aufweisen, ist ebenfalls bekannt. Bei dieser Lösung ist der Mittelpunkt der Kugelfläche in der Mittelebene des Lagers konstruktiv festgelegt. Ähnliche Funktionen werden von Tonnenlagern und Pendelrollenlagern ermöglicht, die einen Winkelfehler der Welle zulassen. Das Ziel dieser Lagerungen ist der Toleranzausgleich, wodurch Verspannungen des Kugelgewindetriebs vermieden werden. Weiter wird die dynamische und statische Belastung der Bauteile reduziert. Es ergeben sich verbesserte akustische Eigenschaften und die Reduktion des mechanischen Spiels, das durch Wärmeausdehnung der Komponenten entsteht.

Bei der beschriebenen Lagerung zwischen Kugelflächen tritt ebenso wie bei der Verwendung von Tonnenlagern und Pendellagern das Problem auf, dass diese Lagerungen eher für Radialkräfte ausgelegt sind. Die in einem elektrisch unterstützten Lenkgetriebe an der Kugelmutter auftretenden Lasten sind jedoch bezüglich der Zahnstange oder Gewindespindel hauptsächlich axial gerichtet.

Die DE 103 10 492 A 1 beschreibt eine Servolenkung, insbesondere für Kraftfahrzeuge, mit einem als Elektromotor gebildeten Servomotor, der ein als Schubstange ausgebildetes, axial verlagerbares Bauelement übereine in einem als Lenkungsgehäuse gebildeten Gestell drehbar, aber axial unverschiebbar gelagerte Mutter antreibt. Der Servomotor, die Schubstange und die Mutter sind mittels eines exzentrischen Lagerringes derart gelagert, dass der Achsabstand zwischen der Motorweile des Servomotors und der Schubstange variierbar ist, was eine einfache, rasche Montage der Servolenkung ermöglicht.

Aus der DE 102 02 483 A1 ist eine elektrische Lenkvorrichtung bekannt, die eine Zahnstange aufweist, die mit einer Lenkspindel verbunden ist, einen Motor zum Unterstützen einer Lenkkraft mit einem koaxial auf der Zahnstange angeordneten Rotor, einen Spindeltrieb, bei dem Kugeln zwischen einer mit dem Rotor verkeilten Mutter und einer auf der Zahnstange gebildeten Schraube eingelegt sind, und die ein Gehäuse aufweist, das insgesamt näherungsweise zylindrisch gestaltet ist. Die Mutter des Kugelumlaufspindelmechanismusses ist drehbar in einem Lager im Inneren des Muttergehäuseabschnittes gelagert.

In der DE 1947337 U ist ein elastisches Wälzlager dargestellt, welches eine axiale Beweglichkeit und eine axiale Federung mit Rückstellkraft aufweist. Ein Wälzlager mit einem Lageraußenring und einem Lagerinnenring, wobei der Lageraußenring und /oder der Lagerinnenring jeweils zwischen mindestens einem Dämpfungselement angeordnet ist, ist aus der DE 10 2004 034 701 A1 bekannt.

Die EP 1 571 067 A 1 offenbart die elastische Lagerung einer Schneckenwelle die koaxial die Motorweile eines Servomotors umgreift.

Die gattungsgemäße EP 2 049 383 81 zeigt eine Lösung, um die Schwenkbarkeit des Radiallagers zu ermöglichen bzw. zu verbessern. Es ist vorgesehen, eine konvexe Wölbung an dem Außenumfang des Außenrings vorzusehen oder die Mutter, auf der der Innenring sitzt, mit einer konvexen Wölbung zu versehen. aufweist. Durch die konvexe Wölbung des Außenumfangs des Außenrings oder der Mutter soll eine Freistellung des Radiallagers und eine Verschwenkbarkeit der Mutter und des axial verlagerbaren Bauelements erreicht werden. An jeder Stirnseite des Radiallagers ist ein Stahlring mit einem aufvulkanisierten Element mit elastomeren Eigenschaften vorgesehen, welches bei wechselnden Lasten eine axiale und radiale Dämpfung sowie die Durchführung und Dämpfung der Schwenkbewegung des axial verlagerbaren Bauelements ermöglichen soll. Bei Biegemomentbeanspruchung des axial verlagerbaren Bauelements soll ein Verspannen des Systems vermieden werden.

Im Betrieb zeigt sich, dass sich an den metallischen Kontaktflächen im Bereich des Außenumfangs der Kugelmutter Geräusche und Verschleiß ergeben. Geräusche entstehen auch an dem metallischen Träger des elastomeren Dämpfungselements.

Die DE 10 2006 037 479 A1 offenbart die Merkmale des Oberbegriffs des unabhängigen Anspruchs 1.

Der Erfindung liegt die Aufgabe zugrunde, eine Servolenkung mit einer verkippbaren Lagerung der Kugelmutter zu schaffen, die eine geringere Geräuschentwickung aufweist.

Diese Aufgabe wird mit einer Servolenkung mit den Merkmalen des Anspruchs 1 gelöst.

Weil das Lager an der äußeren Umfangsfläche des Außenrings über einen in Axialrichtung schmalen Steg in Anlage steht und im Bereich der Anlagefläche oder Anlagelinie ein Kunststoffelement vorgesehen ist, welches einen direkten metallischen Kontakt zwischen dem Lager und dem Gestell verhindert, kann eine besonders gute Geräuschdämpfung erzielt werden.

Der Steg kann konvex ausgeführt sein. Diese Gestaltung ermöglicht eine Kippbewegung des Lagers gegenüber dem Gestell. Vorteilhaft ist hierbei, wenn das Lager an seinem Außenring eine außen umlaufende Nut aufweist, in die eine Dämpfungseinlage eingelegt ist. Die Dämpfungseinlage kann dann mit dem Steg des Gestells zusammen wirken und hier das Entstehen von Geräuschen dämpfen.

Der Lagersitz selbst weist dann einen größeren Durchmesser auf als der Außendurchmesser des Lageraußenrings. Weiter kann die axiale Abstützung der Kugelmutter auch durch Dämpfungselemente bewirkt werden, die in Nuten eingelegt oder eingefügt sind, welche in dem Gestell vorgesehen und der Stirnseite des Lageraußenring in Axialrichtung gegenüber liegen.

Das Dämpfungselement liegt beidseitig an den relativ zueinander in Axialrichtung beweglichen Flächen des Lenkungsgehäuses einerseits und des Lagers andererseits an. Eine metallische Anlage im Kraftfluss, die im Betrieb zu einer Geräuschentwicklung führen könnte, wird auf diese Weise vermieden.

Nachfolgend werden Ausführungsbeispiele der vorliegenden Erfindung anhand der Zeichnung beschrieben. Es zeigen:
- Figur 1:: Ein erstes Ausführungsbeispiel der Erfindung;
- Figur 2:: Ein zweites Ausführungsbeispiel der Erfindung mit umfangsseitigem Dämpfungselement;
- Figur 3:: Eine Variante der Ausführungsform nach Figur 2;
- Figur 4:: Eine dritte Ausführungsform der Erfindung mit Tellerfedern zur axialen Abfederung;
- Figur 5:: Das Dämpfungselement aus Figur 1 bis Figur 4 in einer perspektivischen Darstellung;
- Figur 6:: Eine nicht beanspruchte Abwandlung der Ausführungsform nach Figur 4 mit einem konvexen umfangsseitigen Dämpfungselement; sowie
- Figur 7:: nicht beanpsruchte Variante mit einem einfach zu montierenden Dämpfungselement.

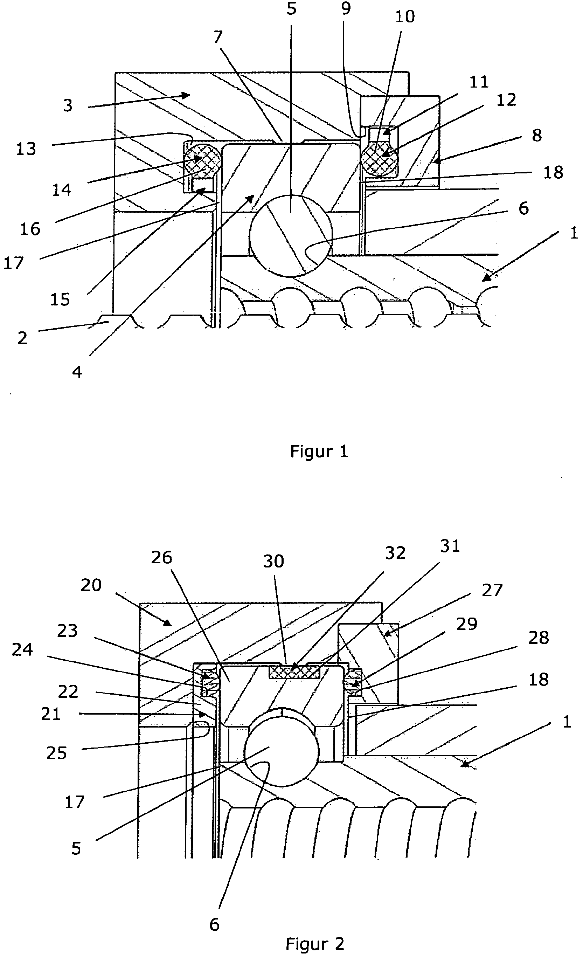

In der Figur 1 ist schematisch ein Längsschnitt durch ein Lenkgetriebe im Bereich der Lagerung einer Kugelmutter 1 dargestellt. Die Kugelmutter 1 umgibt eine Gewindespindel 2 und steht mit der Gewindespindel 2 derart in Eingriff, dass eine Drehung der Kugelmutter 1 die Gewindespindel 2 in Axialrichtung gegenüber einem Gestell 3, welches Teil eines nicht dargestellten Lenkungsgehäuses ist, verschiebt. Die Kugelmutter 1 ist dazu beispielsweise über einen nicht dargestellten Zahnriemen elektromotorisch antreibbar. Die Lagerung der Kugelmutter 1 gegenüber dem Gestell 3 erfolgt in einem Kugellager mit einem Außenring 4, kugelförmigen Wälzkörpern 5 und einer inneren Lauffläche 6, die unmittelbar auf der Kugelmutter 1 ausgebildet ist, wodurch die Lageranordnung besonders kompakt wird. Anstelle dieser besonders kompakten Ausführung kann an dieser Stelle auch ein Standardwälzlager eingesetzt werden.

Die Lagerung des Außenrings 4 in dem Gestell 3 erfolgt in Radialrichtung derart, dass im Bereich des Lagersitzes das Gestell 3 mit einem Steg 7 versehen ist, der umlaufend angeordnet ist und entlang einer Ringfläche an dem Lageraußenring 4 mit geringem Spiel anliegt. Die Passung ist vorzugsweise als Schiebesitz ausgeführt, so dass der Lageraußenring 4 in Axialrichtung mit geringer Kraft verschieblich ist, wobei die äußere Umfangsfläche des Außenrings 4 dann auf der inneren Umfangsfläche des Stegs 7 gleitet.

Der Lageraußenring 4 ist in dem Gestell 3 in seinem Lagersitz durch ein Sicherungselement 8 gesichert, welches beispielsweise als Schraubring ausgeführt sein kann. Das Sicherungselement 8 weist eine dem Lageraußenring 4 zugewandte Nut 9 mit rechteckigem Querschnitt auf. Die Nutenflanken sind zylindrische umlaufende Flächen, die koaxial zu der Anordnung angeordnet sind, während der Nutengrund eine Kreisringfläche ist, die parallel zu der planen Stirnfläche des Lageraußenrings 4 verläuft. Zwischen dem Lageraußenring 4 und dem Nutengrund ist ein federnd und dämpfend wirkendes Dämpfungselement 10 eingelegt. Das Dämpfungselement 10 weist einen ringförmigen Träger 11 und ein ebenfalls ringförmiges Dämpfungselement 12 auf, welches innen an dem Träger 11 befestigt ist. Das Dämpfungselement 12 ist in Axialrichtung der Anordnung dicker ausgeführt als der Träger 11. Das Dämpfungselement 12 liegt mit einer Seite an der benachbarten Stirnfläche des Lageraußenrings 4 an. Mit der anderen Seite liegt es an dem Nutengrund der Nut 9 an.

Entsprechend ist an der gegenüberliegenden Seite das Gestell 3 mit einer Nut 13 versehen, die ebenfalls einen rechteckigen umlaufenden Querschnitt aufweist und die in Axialrichtung der Anordnung zu dem Lageraußenring 4 hin offen ist. In der Nut 13 liegt ein Dämpfungselement 14 ein, dass einen inneren festen Träger 15 und ein äußeres Dämpfungsteil 16 umfasst. Das Dämpfungsteil 16 ist außen auf dem Träger 15 angebracht. Das Dämpfungsteil 16 ist in Axialrichtung der Anordnung dicker als der Träger 15 und liegt an einer Seite an dem Lageraußenring 4 an, während die andere Seite an dem Nutengrund der Nut 13 anliegt. Im übrigen ist der Lageraußenring 4 so in dem Gestell 3 montiert, dass zu beiden Seiten der Stirnflächen des Lageraußenrings 4 ein Spalt 17 beziehungsweise 18 verbleibt und der Lageraußenring 4 in Axialrichtung um das Spaltmaß beweglich innerhalb des Gestells 3 sitzt.

Bei Belastungen, die auf das Lager der Kugelmutter 1 wirken, kann der Lageraußenring 4 in begrenztem Maße ausweichen, so dass die Kugelmutter 1 entsprechend beweglich ist und geringen Verbiegungen oder schlagartigen Belastungen der Zahnstange 2 folgen kann, ohne dass die Lagerung oder der Kugelumlauf selbst beschädigt wird. Der Steg 7 ermöglicht dabei auch eine Verkippung des Lageraußenrings 4 bei radialen Verbiegungen der Zahnstange 2.

Die Dämpfungselemente 10 und 13 sind bei dieser Ausführungsform besonders vorteilhaft, denn sie sind zum einen preiswert zu fertigen, da der Träger 11 beziehungsweise 15 aus einem festen, formstabilen Kunststoffmaterial gefertigt sein kann, während die Dämpfungsteile 12 beziehungsweise 16 auf einem elastomeren Werkstoff gefertigt sein können. Die Verbindung zwischen den beiden genannten Elementen des Dämpfungselements ist nicht besonders hoch beansprucht, da die Träger 11 beziehungsweise 15 nicht im Kraftfluss liegen, wenn der Lageraußenring 4 bewegt wird. Weiter ist durch das Spaltmaß der Spalte 17 und 18 die Bewegung des Lageraußenrings 4 begrenzt, so dass auch der eigentliche Dämpfungskörper nicht über ein konstruktiv vorgegebenes Maß hinaus komprimiert und belastet werden kann. Für die Montage ist es von Vorteil, dass die Dämpfungselemente 10 und 14 bei der Montage einfach in die Nuten 9 beziehungsweise 13 eingelegt werden können, ohne dass besondere Vorrichtungen hierfür erforderlich wären.

Es ergibt sich eine preiswerte, dauerhaft haltbare und einfach zu montierende Lösung und ein besonders geräuscharmer Betrieb wird erzielt, weil die Dämpfungselemente kein metallisches Trägerelement im Kraftfluss aufweisen.

Die Figur 2 zeigt eine andere Ausführungsform der Erfindung in einer Darstellung entsprechend Figur 1. Gleiche Bauteile sind mit gleichen Bezugsziffern versehen. Auf die Darstellung der Zahnstange wurde verzichtet.

Eine kompaktere Bauweise eines Gestells 20 wird möglich, indem ein Dämpfungselement 21 mit einem ringförmigen Träger 22 und einem Dämpfungsteil 23 versehen ist, wobei der Träger 22 eine ringförmig umlaufende, zu einer Planseite hin offene Nut 24 trägt, in die das Dämpfungsteil 23 eingefügt ist. Das Dämpfungsteil 23 selbst ist aus einem Elastomer, während der Träger 22 aus einem harten Kunststoff oder aus Metall gefertigt sein kann. Das Gestell 20 weist einen ringförmig umlaufenden Bund 25 auf, an dem das Dämpfungselement 21 mit seiner der Nut 24 abgewandten Planseite anliegt. Ein Lageraußenring 26 liegt mit einer Planseite als dem Dämpfungsteil 23 an. Die gegenüberliegende Planseite des Lageraußenrings 26 ist durch ein Sicherungselement 27, auch hier in der Bauform eines Schraubringes, gesichert. Das Sicherungselement 27 weist ähnlich wie das Sicherungselement 8 aus Figur 1 eine dem Lageraußenring 26 zugewandte Nut auf, deren Nutengrund parallel zu der benachbarten Flachseite des Lageraußenrings 26 verläuft. In die Nut 28 ist ein ringförmiges Dämpfungselement 29 eingelegt oder eingeformt. Dieses liegt mit seiner dem Nutengrund abgewandten freien Seite an der planen Stirnseite des Lageraußenrings 26 an. Das Gestell 20 weist wiederum einen Steg 30 auf, der den Lageraußenring 26 in Radialrichtung führt. Der Lageraußenring 26 ist in dem an dem Steg 30 anliegenden Bereich mit einer Nut 31 versehen. Die Nut verläuft in Umfangsrichtung des Lageraußenrings 26 auf dessen Außenseite. In die Nut 31 ist ein Dämpfungselement 32 eingelegt, dass in Anlage mit dem Steg 30 angeordnet ist.

Bei der Ausführungsform nach Figur 2 ist es möglich, die ringförmig umlaufenden Dämpfungsteile 23 und 29 in die Nuten 24 und 28 einzuspritzen. Es kommt beispielsweise ein EPDM oder HNBR-Material in Frage. Der Aufbau ist im Vergleich zu der Ausführungsform nach Figur 1 kompakter möglich. Eine Kompression der Dämpfungsteile 23 und 29 wird auch in dieser Ausführungsform begrenzt durch die Dimensionierung der Spalte 17 und 18, die die axiale Bewegung des Lageraußenrings 26 begrenzen, bevor die Dämpfungsteile beschädigt werden können.

Das ringförmige Dämpfungselement 32 kann ebenfalls aus einem Kunststoff gefertigt sein, wobei hier ein relativ harter Kunststoff bevorzugt wird, der mit dem Steg 30 eine günstige Reibpaarung ergibt. Bei dieser Ausführungsform steht der Lageraußenring 26 anders als bei der Ausführung nach Figur 1 nicht in direktem metallischem Kontakt mit dem Gestell 20, so dass eine weiter verbesserte Geräuschdämpfung erzielt wird.

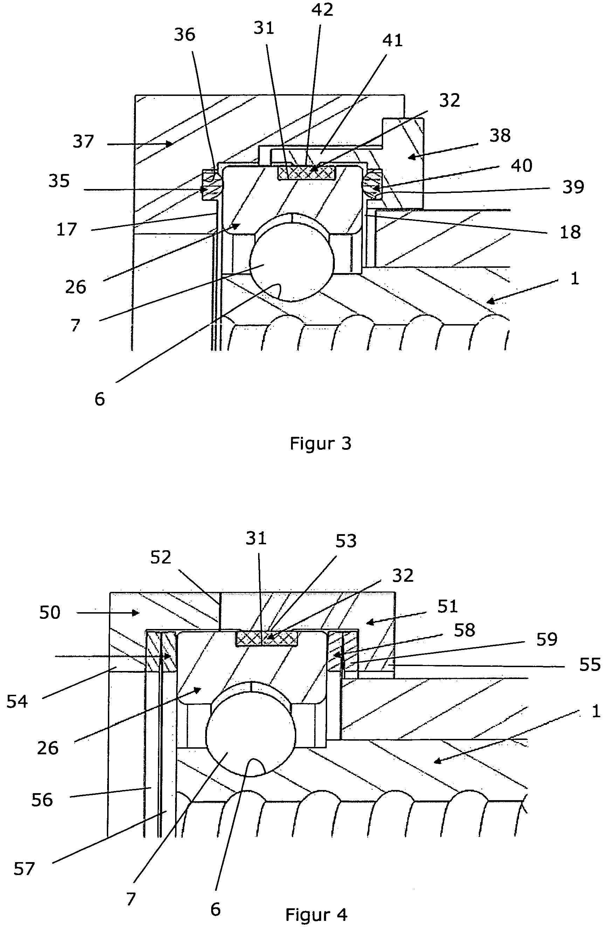

Die Figur 3 zeigt eine einfachere Variante der Ausführung nach Figur 2. Bei dieser Variante ist ein Dämpfungselement 35 unmittelbar in eine umlaufende Nut 36 eines Gestells 37 eingesetzt, beispielsweise eingespritzt. Der Lageraußenring 26 ist wie in der Figur 2 mit der außen umlaufenden Nut 31 versehen, in der das Dämpfungselement 32 einliegt. Ein Sicherungselement 38 ist hier als Schraubhülse ausgeführt. Das Sicherungselement 38 weist wie in Figur 2 eine dem Lageraußenring 26 zugewandte Nut 39 und ein in der Nut 39 angeordnetes Dämpfungselement 40 auf. Die Dämpfungselemente 35 und 40 liegen an den beiden flachen Stirnseiten des Lageraußenrings 26 an. Das Sicherungselement 38 weist einen hülsenförmigen Fortsatz 41 auf, der den Lageraußenring 26 umgibt und dessen Innendurchmesser größer ist als der Außendurchmesser des Lageraußenrings 26. Der hülsenförmige Fortsatz 41 weist auf seiner Innenseite einen Steg 42 auf, der in der dargestellten Montageposition in Anlage mit dem Dämpfungselement 32 steht, genauer gesagt etwa mittig an dessen äußerer Oberfläche umlaufend anliegt. Die gesamte Anordnung ist etwa rotationssymmetrisch zu der Mittenachse der Kugelmutter 1.

Bei dieser Ausführungsform ist die Zahl der Bauelemente weiter verringert, da das Dämpfungselement 35 unmittelbar in dem Gestell 37 angeordnet ist. Der Lageraußenring 26 ist wie bei den anderen Ausführungsbeispielen in geringem Maße beweglich. Bei Bewegung in Axialrichtung gleitet das Dämpfungselement 32 an der inneren Oberfläche des Steges 42, während die Dämpfungselemente 35 bzw. 40 je nach Bewegungsrichtung komprimiert werden. Auf Grund der relativ kurzen Erstreckung des Steges 42 in Achsrichtung kann der Lageraußenring 26 auch in geringem Umfang kippen, ohne dass eine Beschädigung eintritt. Die Verformung der Dämpfungselemente 35 und 40 ist wiederum durch die Dimensionierung der Spalte 17 und 18 begrenzt.

Auch bei der Ausführungsform nach Figur 3 wird ein niedriges Geräuschniveau im Betrieb erzielt, da der Lageraußenring 26 nicht in unmittelbarem metallischen Kontakt mit dem Gestell 37 steht.

In der Figur 4 ist eine Ausführungsform dargestellt, bei der die Kugelmutter und der Lageraußenring baugleich sind mit den Ausführungen nach Figuren 2 und 3. Der Lageraußenring 26 weist ebenfalls umfangsseitig eine Nut 31 auf, in die ein Dämpfungselement 32 eingelegt ist.

Bei dieser Ausführungsform ist das Gestell im Bereich der dargestellten Lagerung als zweiteiliges Gehäuse ausgebildet. Ein erster Gehäuseteil 50 und ein zweiter Gehäuseteil 51 sind entlang einer Teilung aneinander gesetzt und mit nicht dargestellten Befestigungsmitteln befestigt. Der Gehäuseteil 51 weist einen radial nach innen weisenden Steg 53 auf, der den Lagersitz wie oben beschrieben bildet. Der Steg 53 liegt an dem Dämpfungselement 32 an. Die Gehäuseteile 50 und 51 bilden um den Lageraußenring 26 herum zunächst ein im Wesentlichen zylindrisches Gehäuse, welches in einem Abstand von dem Lagerring 26 an jedem der Gehäuseteile 50 und 51 einen nach innen weisenden Ringbund trägt. Der Ringbund ist in Radialrichtung auf die Symmetrieachse zu kürzer als die radiale Erstreckung des Lageraußenrings 26. Die beiden Ringbunde 54 und 55 bilden kreisringförmige Flächen, die parallel zu den planen Außenseiten des Lageraußenrings 26 verlaufen. Auf diesen kreisringförmigen Flächen liegen Tellerfedern auf, und zwar bei dem Ringbund 54 eine erste Tellerfeder 56 und eine zweite Tellerfeder 57. Bei dem zweiten Ringbund 55 sind eine dritte Tellerfeder 58 und eine vierte Tellerfeder 59 vorgesehen. Die Tellerfedern 56 und 57 sind spiegelbildlich angeordnet. Ihre Oberflächen liegen also nicht parallel zueinander, sondern die Tellerfedern 56 und 57 berühren sich linienförmig im Bereich des größten Durchmessers auf der konkaven Seite. Die konkaven Seiten der Tellerfedern 56 und 57 sind einander zugewandt. Die konvexen Seite sind einander abgewandt. Die Tellerfeder 56 liegt im Bereich ihres kleinsten Durchmessers linienförmig an der planen Seite des Ringbundes 54 an. Die Tellerfeder 57 liegt mit ihrem kleinsten Durchmesser linienförmig an der Stirnseite des Lageraußenrings 26 an. Entsprechend sind die Tellerfedern 58 und 59 ebenfalls spiegelbildlich zueinander angeordnet. Die Linien des kleinsten Durchmessers liegen an der Innenseite des Flansches 55 bzw. der Außenseite des Lageraußenrings 26 an, während die beiden Tellerfedern sich an ihrem größten Durchmesser linienförmig berühren. Der Lageraußenring 26 ist auf diese Weise in Axialrichtung der Vorrichtung federnd zwischen den Tellerfedern gelagert. Bei einer Federbewegung gleitet wie in den anderen

Ausführungsbeispielen auch das Dämpfungselement 32 an der Innenseite des Stegs 53. Bei Kippbewegungen kann der Lageraußenring an einer Seite gegen die Tellerfeder 57 und an der diametral gegenüber liegenden Seite gegen die Tellerfeder 58 drücken. Das Dämpfungselement 32 erlaubt eine entsprechende Verkippung des Lageraußenrings 26. Diese Ausführungsform ist besonders robust und durch die kleinen Kontaktflächen in dem Bereich der Tellerfedern sowie den nicht metallischen Kontakt im Bereich des Dämpfungselements 32 dennoch im Betrieb geräuscharm.

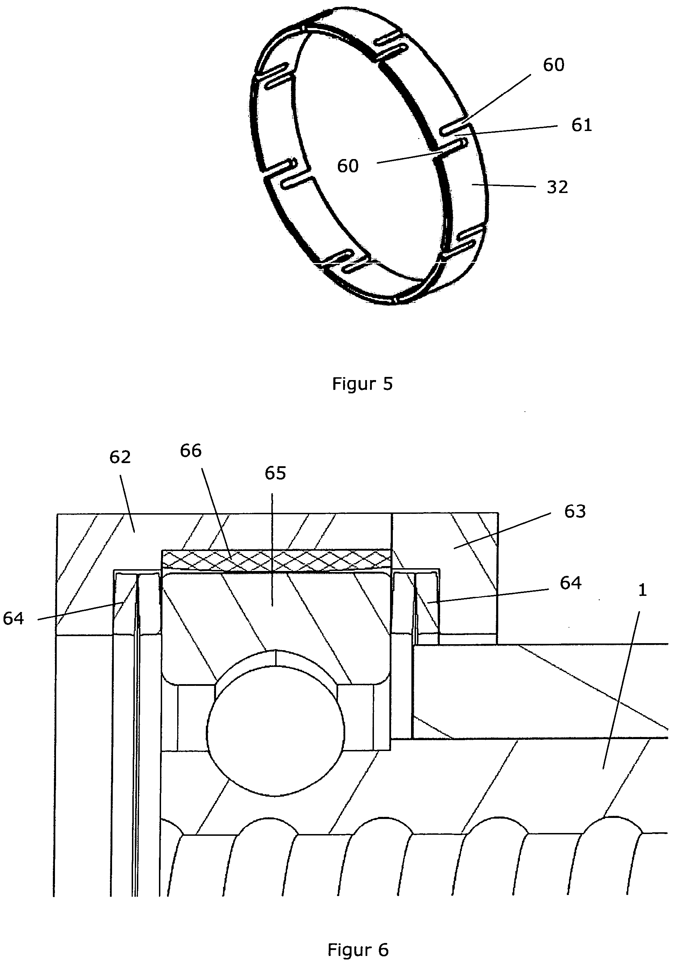

Die Figur 5 zeigt in perspektivischer Darstellung einen Ring, wie er als Dämpfungselement 32 eingesetzt werden kann. Das Dämpfungselement 32 weist eine generell zylindrische, ringförmige Grundform auf, wobei die Materialstärke über den gesamten Umfang im Wesentlichen konstant ist. Von den Schmalseiten her sind in regelmäßigen Abständen Ausnehmungen 60 vorgesehen, die jeweils paarweise unmittelbar benachbart von den sich gegenüber liegenden Schmalseiten her eingebracht worden sind. Zwischen den Ausnehmungen 60 ist dadurch ein schmaler, S-förmiger Steg 61 ausgebildet, der federnd wirkt. Auf Grund dieser Gestaltung kann das Dämpfungselement 32 gedehnt werden, so dass sich sein Innendurchmesser vergrößert. Dadurch kann das Dämpfungselement 32 auf dem Lageraußenring 26 montiert werden.

Weiter ist das Dämpfungselement 32 auf diese Weise soweit flexibel, dass es sich an konkrete Dimensionen im Einsatz zwischen dem Lageraußenring 26 und dem benachbarten Steg anpassen kann. Insbesondere kann das Dämpfungselement 32 auch die unterschiedliche Wärmeausdehnung zwischen dem Material des Lageraußenrings 26, der üblicherweise aus Stahl ist, sowie dem Lenkungsgehäuse oder Gestell, welches aus Aluminiumguss gefertigt wird, kompensieren. Bei Wärmeeinfluss vergrößert sich der Spalt, in dem das Dämpfungselement 32 angeordnet ist. Das Dämpfungselement 32 ist aus Kunststoff mit einem höheren Ausdehnungskoeffizienten gefertigt und seine Dicke wächst dadurch in einem Maß, das der Vergrößerung des Spaltes entspricht. Das Spiel des Lagers in dem Gestell bleibt dadurch im wesentlichen konstant. Die Ausdehnung des Dämpfungselements 32 selbst in Umfangsrichtung wird von den Ausschnitten 60 kompensiert. Das Dämpfungselement 32 ist vorzugsweise aus einem entsprechend belastbaren Kunststoffmaterial gefertigt.

Die Figur 6 zeigt eine nicht beanspruchte Ausführungsform ähnlich Figur 4. Bei dieser Ausführungsform ist das Gehäuse ebenfalls geteilt in zwei Gehäuseteile 62 und 63. Vier Tellerfedern 64 liegen wie oben beschrieben zwischen den Ringbunden der Gehäuseteile 62 und 63 und einem Lageraußenring 65. Der Lageraußenring 35 weist kein eingearbeitetes Dämpfungselement auf, sondern liegt mit seiner Außenseite an einem Dämpfungsring 66 an, der in den Gehäuseteil 62 eingelegt ist und der den Lageraußenring 65 an dessen Außenseite vollständig umgibt. Das Dämpfungselement 66 ist mit einer nach innen leicht konvexen Oberfläche versehen, so dass der Lageraußenring 65 im Wesentlichen linienförmig an dem Dämpfungselement 66 anliegt. Die Funktion ist ähnlich wie zu der Ausführungsform nach Figur 4 beschrieben. Die Tellerfedern 64 ermöglichen eine Bewegung des Lageraußenrings 65 in Axialrichtung sowie eine leichte Verkippung. Die Verkippung wird durch die Form des Dämpfungselements 66 erleichtert, so dass bei einer Verbiegung der in der Kugelmutter 1 gelagerten Zahnstange das Lager dieser Verbiegung folgen kann, ohne dass eine Überlastung und damit ein Lagerschaden zu befürchten wäre.

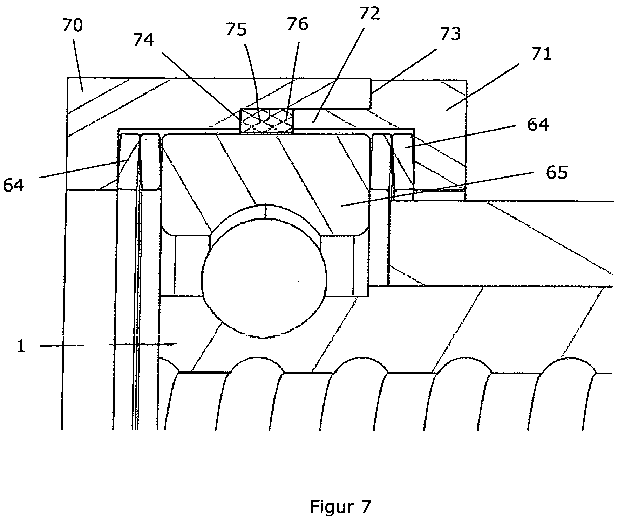

Die Figur 7 zeigt schließlich eine nicht beanspruchte Ausführungsform ähnlich den Figuren 4 und 6 mit Tellerfedern 64 zur axialen Abstützung des Lageraußenrings 65. Bei dieser Ausführungsform ist das Gestell im Bereich des dargestellten Lagers aus einem ersten Gehäuseteil 70 und einem zweiten Gehäuseteil 71 zusammengesetzt. Die beiden Gehäuseteile 70 und 71 sind hier nur schematisch dargestellt. Sie sind in einer realen Ausführung Teile eines komplexen Lenkgetriebegehäuses. Im Wesentlichen sind die Bauteile 70 und 71 so gestaltet, dass sie den Lageraußenring 65 umfangsseitig nach Art eines Lagersitzes umgeben und dass sie radial nach innen weisende Ringbunde ausbilden, an denen die Tellerfedern 64 anliegen. Diese Konstruktionselemente sind im Zusammenhang der Figur 4 näher beschrieben.

Die Gehäuseteile 70 und 71 sind so zusammengefügt, dass das Gehäuseteil 71 mit einem hülsenförmigen Bereich 72 versehen ist, der gegenüber dem äußeren Umfang in einem Absatz 73 mit verringertem Umfang anschließt. Entsprechend ist das Gehäuseteil 70 in einem Absatz 74 innen im Durchmesser vergrößert. Der hülsenförmige Bereich 72 passt in diesen Bereich des Bauteils 74. Die Länge in Axialrichtung bezogen auf die Längsachse der Kugelmutter 1 ist bei dem hülsenförmigen Bereich 72 so gewählt, dass bei Anlage der Bauteile 70 und 71 aneinander zwischen dem Absatz 74 und der Stirnseite des hülsenförmigen Bereichs 72 ein Freiraum verbleibt, der eine umlaufende Nut 75 bildet. In die umlaufende Nut 75 ist ein Dämpfungselement 76 eingelegt. Die Nut 75 umgibt in fertig montiertem Zustand den Lageraußenring 65 mittig entlang seiner äußeren Umfangsfläche. Das Dämpfungselement 76 liegt an der äußeren Umfangsfläche des Lageraußenrings 65 an, während zwischen den Gehäuseteilen 70 und 71 im Lageraußenring 65 ein umlaufender Ringspalt vorgesehen ist.

Im Betrieb kann bei axialen Belastungen und insbesondere bei Biegebeanspruchung der nicht dargestellten Gewindespindel die Kugelmutter 1 durch federnde Bewegung gegen die Tellerfedern 64 verlagert werden. Die Lagerung im Bereich der äußeren Umfangsfläche durch das Dämpfungselement 76 ermöglicht auch eine Verschwenkung des Lageraußenrings gegenüber der konstruktiv vorgesehenen Achsrichtung, so dass auch Biegebeanspruchungen, wie sie im Betrieb auftreten, nicht zu einer Beschädigung des Kugelumlaufs oder des Lagers der Kugelmutter führen.

Bei dieser Ausführungsform kann das Dämpfungselement 76 aus nahezu beliebigen Materialien gefertigt sein, da es für die Montage nicht gedehnt oder gestaucht werden muss. Das Dämpfungselement kann einen Ring entsprechend Figur 5 sein, die dort dargestellten Ausnehmungen 60 sind bei der Ausführungsform nach Figur 7 jedoch nicht unbedingt erforderlich.

Ein Vorteil von Tellerfedern besteht darin, dass mit zwei Federn an jeder Seite des Lagers eine progressive Kennlinie der Federung erzielt werden kann. Ein weiterer Vorteil besteht darin, dass die Tellerfedern selbst einen metallischen Anschlag am Ende des Federwegs darstellen. Es ist kein zusätzlicher Anschlag erforderlich.

### Bezugszeichen

- 1.: Kugelmutter
- 2.: Gewindespindel
- 3.: Gestell
- 4.: Außenring
- 5.: Wälzkörper
- 6.: Lauffläche
- 7: Steg
- 8.: Sicherungselement
- 9.: Nut
- 10.: Dämpfungselement
- 11.: Träger
- 12.: Dämpfungselement
- 13.: Nut
- 14.: Dämpfungselement
- 15.: Träger
- 16.: Dämpfungselement
- 17.: Spalt
- 18.: Spalt
- 20.: Gestell
- 21.: Dämpfungselement
- 22.: Träger
- 23.: Dämpfungsteil
- 24.: Nut
- 25.: Bund
- 26.: Lageraußenring
- 28.: Nut
- 29.: Dämpfungselement
- 30.: Steg
- 31.: Nut
- 32.: Dämpfungselement
- 35.: Dämpfungselement
- 36.: Nut
- 37.: Gestell
- 38.: Sicherungselement
- 39.: Nut
- 40.: Dämpfungselement
- 41.: Fortsatz
- 42.: Steg
- 50.: Gehäuseteil
- 51.: Gehäuseteil
- 52.: Teilung
- 53.: Steg
- 54.: Ringbund
- 55.: Ringbund
- 56.: Tellerfeder
- 57.: Tellerfeder
- 58.: Tellerfeder
- 59.: Tellerfeder
- 60.: Ausnehmung
- 61.: Steg
- 62.: Gehäuseteil
- 63.: Gehäuseteil
- 64.: Tellerfeder
- 65.: Lageraußenring
- 66.: Dämpfungselement
- 70.: Gehäuseteil
- 71.: Gehäuseteil
- 72.: hülsenförmiger Bereich
- 73.: Absatz
- 74.: Absatz
- 75.: Nut
- 76.: Dämpfungselement

## Patentansprüche

1. Servolenkung, insbesondere für ein Kraftfahrzeug, mit einem Servomotor, der ein axial verlagerbares Bauelement über eine in einem Gestell (3) drehbar in einem Lager (4, 5) gelagerte Mutter (1) antreibt, wobei die Mutter (1) mit einer an dem Bauelement ausgebildeten Gewindespindel (2) in Eingriff steht und über das Lager in Axialrichtung mittels Federelementen (14) elastisch gegenüber dem Gestell (3) sowie in Radialrichtung an einem umlaufenden Steg des Gestells (3) abgestützt ist, **dadurch gekennzeichnet, dass** im Bereich des Stegs ein Kunststoffelement (32) vorgesehen ist, welches einen direkten metallischen Kontakt zwischen dem Lager (4) und dem Steg des Gestells (3) verhindert, wobei das Kunststoffelement (32) in der Lage ist eine unterschiedliche Wärmedehnung des Lageraußenrings (4) und des Gestells (3) zu kompensieren.

2. Servolenkung nach Anspruch 1, **dadurch**
**gekennzeichnet, dass** das Kunststoffelement (32) in einer an der äußeren Umfangsfläche des Lagers (4, 5) ausgebildeten Nut (31) einliegt.

3. Servolenkung nach einem der vorhergehenden Ansprüche, **dadurch gekennzeichnet, dass** das Kunststoffelement eine Dämpfungseinlage (32) ist.

4. Servolenkung nach einem der vorhergehenden Ansprüche, **dadurch gekennzeichnet, dass** das Kunststoffelement (32) als ein Ring ausgebildet ist und wenigstens eine Ausnehmung (60) aufweist zur elastischen Dehnung des Kunststoffelements (32).

5. Servolenkung nach einem der vorhergehenden Ansprüche, **dadurch gekennzeichnet, dass** zur axialen Abstützung der Kugelmutter (1) Dämpfungselemente (23, 29, 35, 40) vorgesehen sind, die in Nuten (24, 28, 36, 39) eingelegt oder eingefügt sind, welche in dem Gestell vorgesehen sind und der Stirnseite des Lageraußenring (26) in Axialrichtung gegenüber liegen.

## Claims

1. Power steering, in particular for a motor vehicle, having a servo drive which drives an axially displaceable component by means of a nut (1) which is rotatable in a body (3) and arranged in a support (4, 5), whereby the nut (1) meshes with a threaded spindle (2) formed on the component and by means of the support is elastically supported in an axial direction relative to the body (3) by means of spring elements (14) and in a radial direction on a circumferential bar of the body (3), **characterised in that** a plastic element (32) is provided in the region of the bar, which plastic element prevents direct metal contact between the support (4) and the bar of the body (3), whereby the plastic element (32) is able to compensate for the different thermal expansion of the outer ring of the support (4) and the body (3).

2. Power steering according to Claim 1, **characterised in that** the plastic element (32) is in a groove (31) formed in an outer circumferential surfaces of the support (4, 5).

3. Power steering according to any one of the preceding claims, **characterised in that** the plastic element is an anti-vibration insert (32).

4. Power steering according to any one of the preceding claims, **characterised in that** the plastic element (32) is formed as a ring and has at least one recess (60) for the elastic expansion of the plastic element (32).

5. Power steering according to any one of the preceding claims, **characterised in that** attenuators (23, 29, 35, 40) are provided for the axial support of the ball nut (1), which attenuators are placed or inserted into grooves (24, 28, 36, 39) which are provided in the body and which are opposite the front face of the outer ring of the support (26) in an axial direction.

## Revendications

1. Mécanisme de contrôle assisté, en particulier destiné à un véhicule motorisé, doté d'un servomoteur où un élément constructif, susceptible de s'abaisser de façon axiale, est entraîné par l'intermédiaire d'un écrou(1) située dans un boîtier (3), de rotation libre, posée sur un roulement (4, 5) dans lequel la base filetée (1) s'agrippe à un pignon hélicoïdal (2) constitué sur l'élément constructif et bute, tant en direction axiale, sur le roulement, par l'intermédiaire d'éléments élastiques faisant ressort (14) sur le boîtier (3), qu'en direction radiale, sur une lame de pourtour du boîtier (3), **caractérisé en ce que**,à proximité de la lame, un élément de matière synthétique (32) est présent, qui empêche un contact direct de métal sur métal entre le roulement (4) et la lame du boîtier (3), étant entendu que l'élément de matière synthétique (32) est en mesure de compenser les dilatations thermiques distinctes de l'anneau externe du roulement (4) et du boîtier (3).

2. Mécanise de contrôle assisté selon la revendication 1,
**caractérisé en ce que** l'élément de matière synthétique (32) s'insère dans une fente (31) creusée à la surface périphérique externe du roulement (4, 5).

3. Mécanisme de contrôle assisté selon l'une des revendications précédentes, **caractérisé en ce que** l'élément de matière synthétique est un élément amortisseur (32).

4. Mécanisme de contrôle assisté selon l'une des revendications précédentes, **caractérisé en ce que** l'élément de matière synthétique (32) est élaboré en forme d'anneau et possède au moins une échancrure (60) aux fins de permettre la dilatation élastique de l'élément de matière synthétique (32).

5. Mécanisme de contrôle assisté selon l'une des revendications précédentes, **caractérisé en ce que** sont prévus, pour assurer la axial butée du écrou à billles (1), des éléments amortisseurs (23, 29, 35, 40), insérés ou glissés dans des fentes (24, 28, 36, 39), lesquelles sont prévues dans le boîtier et font face, dans la direction axiale, au côté frontal de l'anneau externe du roulement (26).
